# EUROPÄISCHE PATENTSCHRIFT

(11) **EP 1 862 760 B1**
(45) Veröffentlichungstag und Bekanntmachung des Hinweises auf die Patenterteilung: **20.12.2017**
(21) Anmeldenummer: 07008602.0
(22) Anmeldetag: 27.04.2007
(51) Int. Cl.: G01B 11/02

(54) **Vorrichtung zur optischen Vermessung und/oder Überprüfung von Schweißbaugruppen**
Device for optical measurement and/or testing of welded assemblies
Dispositif destiné à la mesure et/ou la surveillance optique de composants de soudure

(30) Priorität: 02.06.2006 DE 102006026265
(43) Veröffentlichungstag der Anmeldung: 05.12.2007
(73) Patentinhaber: Benteler Automobiltechnik GmbH, 33102 Paderborn (DE)
(72) Erfinder: Lübbers, Rainer, 33098 Paderborn (DE); Relard, Hermann, 33129 Delbrück (DE); Erfling, Cordt, 33098 Paderborn (DE)
(74) Vertreter: Ksoll, Peter

(56) Entgegenhaltungen:
- WO-A-03/044458
- US-A1- 2004 179 205
- US-B1- 6 505 495

## Beschreibung

Die Erfindung betrifft eine Vorrichtung zur optischen Vermessung und/oder Überprüfung von Schweißbaugruppen, insbesondere von Kraftfahrzeugachsen oder Instrumententrägern, gemäß dem Oberbegriff von Patentanspruch 1.

Bisher werden Schweißbaugruppen, z. B. Kraftfahrzeugachsen oder Instrumententafelträger, in der Serienproduktion entweder attributiv oder messend auf ihre Maßhaltigkeit geprüft.

Attributive Prüfungen werden durch mechanische Abstecklehren realisiert. Diese Vorgehensweise ist jedoch zeitaufwendig, wenig flexibel und teilweise ungenau sowie störanfällig.

Darüber hinaus sind photogrammetrische Verfahren zur Objektvermessung bekannt. Hierbei wird ein Objekt in einem Messraum angeordnet und von Kameras, die unterschiedliche Positionen haben, erfasst. Durch die Zusammenführung der Bildinformationen der einzelnen Kameras ist eine Vermessung des Objekts im dreidimensionalen Raum möglich. Als nachteilig wird jedoch angesehen, dass die Kameras vor jeder Messung auf das Messobjekt kalibriert werden müssen. Das ist zeitaufwendig und führt zu ungenauen Messergebnissen.

Aus der US 2004/0179205 geht ein Verfahren und eine Vorrichtung zur Prüfung und zur Identifizierung eines Messgerätes bzw. einer Messeinrichtung hervor, mit welchem der räumliche Abstand eines oder mehrerer verschiedener Punkte in einem Messraum gemessen werden kann. Im Messraum sind hierfür Referenzobjekte auf einem Träger angeordnet. Der Träger besteht aus einem Material mit hoher Maßhaltigkeit und äußerst geringer Wärmeausdehnung.

Durch die WO 03/044458 A1 gehört ein Kalibrierobjekt für eine optische Vermessungseinrichtung aus Invar-Stahl zum Stand der Technik. Invar-Stahl hat einen Wärmeausdehnungskoeffizienten α kleiner gleich (≤) 2,0* 10⁻⁶/K bei 20 °C.

Der Erfindung liegt ausgehend vom Stand der Technik die Aufgabe zugrunde, eine Vorrichtung zur optischen Vermessung und/oder Überprüfung von Schweißbaugruppen aufzuzeigen, die eine höhere Messgenauigkeit und eine schnellere Vermessung der Messobjekte ermöglicht.

Diese Aufgabe wird durch eine Vorrichtung mit den im Patentanspruch 1 angegebenen Merkmalen gelöst.

Bei der erfindungsgemäßen Vorrichtung ist im Messraum ein Referenzobjekt ortsfest angeordnet, das aus einem Werkstoff mit einem Wärmeausdehnungskoeffizienten α kleiner gleich (≤) 2,0 * 10⁻⁶/K bei 20 °C besteht, und es sind zumindest zwei Kameras an einem Sensorträger befestigt, der aus einem Werkstoff mit einem Wärmeausdehnungskoeffizienten α kleiner gleich (≤) 2,0 * 10⁻⁶/K bei 20 °C besteht. Zudem weist der Messraum eine Überdruckbelüftung auf und ist innerhalb einer lichtdichten Umhausung angeordnet.

Das Referenzobjekt wird bei jeder Bauteilvermessung mit gemessen. Aus dieser Referenzmessung bei der eigentlichen Messung können Korrekturwerte ermittelt werden. Diese werden verwendet, um die von den Kameras gelieferten Bilder in einer Auswerteeinheit rechentechnisch zu korrigieren, z. B. durch Verschiebung einzelner Bildpunkte. Mithin wird eine Kalibrierung der Vorrichtung durchgeführt.

Durch die Verwendung eines speziellen Werkstoffes mit einer äußerst geringen Wärmeausdehnung ist sichergestellt, dass sich die Position und die Ausdehnung des Referenzobjekts nicht verändert, wodurch die Qualität des Messergebnisses weiter erhöht wird.

Bei photogrammetrischen Messverfahren ist das Messergebnis von der Anordnung der Kameras abhängig. Durch die Anordnung von mehreren Kameras auf einem Sensorträger werden die Kameras lagefixiert und ihre Position zueinander ist nicht mehr veränderbar. Hierzu ist vorgesehen, dass der Sensorträger aus einem Werkstoff besteht mit einem Wärmeausdehnungskoeffizienten α kleiner gleich (≤) 2,0 *10⁻⁶/K bei 20°C. Es ist mithin sichergestellt, dass sich die Position der Kameras durch Temperatureinflüsse nicht verändert.

Der Messraum besitzt eine Überdruckbelüftung und ist innerhalb einer Umhausung angeordnet, die lichtdicht ausgelegt ist. Hierdurch kann in vorteilhafter Weise das Eindringen von Verschmutzungen in den Messraum vermieden werden.

Vorteilhafte Ausführungsformen und Weiterbildungen des Erfindungsgedankens sind Gegenstand der abhängigen Ansprüche 2 bis 9.

Als konstruktive Maßnahme hat es sich als vorteilhaft erwiesen, den Sensorträger plattenförmig auszuführen. Somit wird eine besonders einfache Befestigung der Kameras ermöglicht.

Der Sensorträger ist zweckmäßigerweise an einem Traggestell befestigt, welches den Messraum umgibt. Das Traggestell ermöglicht die Anordnung des Sensorträgers über dem Messobjekt im Messraum.

Darüber hinaus ist es vorstellbar, dass zumindest eine Kamera an einem Traggestell befestigt ist, welches den Messraum umgibt. Somit kann auch eine Kamera im Messraum angeordnet werden, wenn es nicht möglich oder sinnvoll ist, sie an einem Sensorträger zu befestigen.

Das Traggestell besteht aus einem Werkstoff mit einem Wärmeausdehnungskoeffizienten α kleiner gleich (≤) 2,0 * 10⁻⁶/K bei 20 °C. Hierdurch werden mögliche Einflüsse durch Temperaturschwankungen auf das Messergebnis weiter reduziert.

Das Referenzobjekt, der Sensorträger und/oder das Traggestell können aus kohlefaserverstärktem Kunststoff (CFK, wird auch als kohlenstofffaserverstärkter Kunststoff bezeichnet) bestehen. Kohlefaserverstärkter Kunststoff hat in Längsrichtung der Kohlefasern einen Wärmeausdehnungskoeffizienten α von 0,110⁻⁶/K bei 20°C. Weitere vorteilhafte Materialien für das Referenzobjekt, den Sensorträger und/oder das Traggestell sind glasfaserverstärkter Kunststoff (GFK), Carbon und Invar-Stahl. Diese Materialien zeichnen sich ebenfalls durch sehr geringe Wärmeausdehnungskoeffizienten α aus.

Die Erfindung ist nachfolgend anhand eines in einer Figur dargestellten Ausführungsbeispiels näher erläutert.

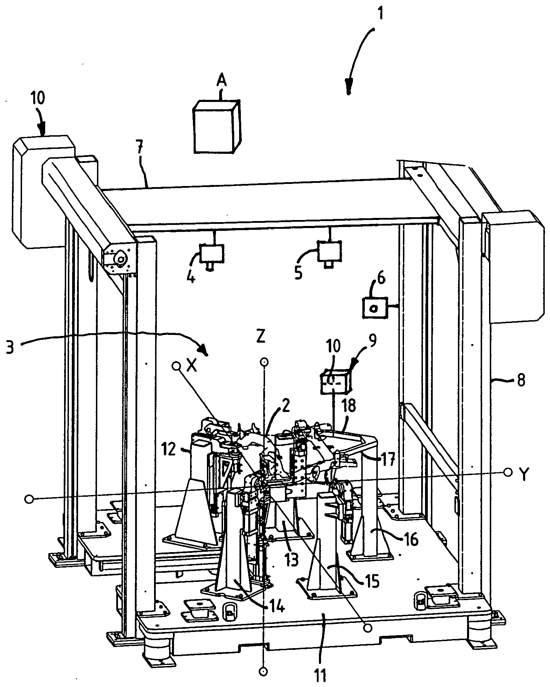

In der Figur ist eine Vorrichtung 1 zur optischen Vermessung und/oder Überprüfung von Schweißbaugruppen 2, insbesondere von Kraftfahrzeugachsen oder Instrumententrägern, dargestellt. Mit X, Y und Z sind in der Figur die Raumkoordinaten gekennzeichnet.

Die Vorrichtung umfasst einen Messraum 3 mit darin angeordneten Kameras 4-6 zur Aufnahme von Bildern einer Schweißbaugruppe 2. Hierzu sind zwei Kameras 4, 5 an einem Sensorträger 7 befestigt, der sich über dem Messraum 3 befindet. Der Sensorträger 7 ist plattenförmig ausgeführt und an einem Traggestell 8 befestigt, welches den Messraum 3 umgibt Der Sensorträger 7 und das Traggestell 8 bestehen aus kohlefaserverstärktem Kunststoff (CFK) mit einem Wärmeausdehnungskoeffizienten α kleiner gleich (≤) 2,0 * 10⁻⁶/K bei 20 °C.

Erfindungsgemäß ist im Messraum 3 ein Referenzobjekt 9 ortsfest angeordnet. Das Referenzobjekt 9 hat die Form eines Quaders und ist an der Oberfläche allseits mit Referenzmarkierungen 10 in Form von Gitterlinien versehen. Das Referenzobjekt 9 besteht ebenfalls aus CFK mit einem Wärmeausdehnungskoeffizienten α kleiner gleich (≤) 2,0 * 10⁻⁶/K bei 20°C. Die einzelnen Schichten des kohlefaserverstärkten Kunststoffs sind so im Referenzobjekt 9 angeordnet, dass die Wärmeausdehnung in allen Dimensionen des Referenzobjektes 9 gleich klein ist.

Die Kameras 4-6 sind mit einer Auswerteeinrichtung A verbunden, die dazu vorgesehen ist, eine Synthese der Bildinformationen durchzuführen, um dreidimensionale Objektdaten des Messobjekts 2 zu ermitteln.

Der Messraum 3 ist innerhalb einer hier nur andeutungsweise dargestellten Umhausung 10 angeordnet und lichtdicht ausgelegt. Des Weiteren besitzt der Messraum 3 eine Überdruckbelüftung. Hierdurch kann das Eindringen von Verschmutzungen in den Messraum 3 vermieden werden.

Im Messraum 3 sind auf einer stabilen Basisplatte 11 vier Tragsäulen 12-15 angeordnet, von denen zwei Tragsäulen 12, 14 höhenverstellbar sind. Eine Positioniersäule 16 besitzt an ihrem oberen Ende zwei Arme 17, 18 mit jeweils einem Dorn, welche dazu vorgesehen sind, in Öffnungen der Schweißbaugruppe 2 zum Eingriff zu gelangen. Mithin ist die Schweißbaugruppe 2 in einer definierten Lage vor Beginn einer Messung positionierbar.

Eine direkte Vermessung eines Merkmals der Schweißbaugruppe 2 erfolgt durch Aufnahme mehrerer Bilder des Merkmals mit den Kameras 4-6 und ausschließender Auswertung der Bildinformationen in der Auswerteeinrichtung A. Hierbei wird bei jeder Messung die Position und die Referenzmarkierungen 10 des ortsfesten Referenzobjektes 9 von den Kameras 4-6 mit erfasst und zur Kalibrierung der Vorrichtung verwendet. Hierdurch wird die Qualität des Messergebnisses wesentlich verbessert. Eine weitere Verbesserung des Messergebnisses wird dadurch erzielt, dass das Referenzobjekt 9 aus kohlefaserverstärktem Kunststoff mit dem oben genannten, äußerst geringen Wärmeausdehnungskoeffizienten α besteht.

### Bezugszeichen:

- 1 -: Vorrichtung
- 2 -: Schweißbaugruppe
- 3 -: Messraum
- 4 -: Kamera
- 5 -: Kamera
- 6 -: Kamera
- 7 -: Sensorträger
- 8 -: Traggestell
- 9 -: Referenzobjekt
- 10 -: Referenzmarkierung
- 11 -: Basisplatte
- 12 -: Tragsäule
- 13 -: Tragsäule
- 14 -: Tragsäule
- 15 -: Tragsäule
- 16 -: Positioniersäule
- 17 -: Arm
- 18 -: Arm

- A -: Auswerteeinrichtung
- X -: Raumkoordinate
- Y -: Raumkoordinate
- Z -: Raumkoordinate

## Patentansprüche

1. Vorrichtung zur optischen Vermessung und/oder Überprüfung von Schweißbaugruppen (2), insbesondere von Kraftfahrzeugachsen oder Instrumententrägern, welche einen Messraum (3) mit darin angeordneten Kameras (4-6) zur Aufnahme von Bildern einer Schweißbaugruppe (2) sowie eine Auswerteeinrichtung (A) umfasst, wobei im Messraum (3) ein Referenzobjekt (9) ortsfest angeordnet ist, wobei das Referenzobjekt (9) aus einem Werkstoff besteht mit einem Wärmeausdehnungskoeffizienten α kleiner gleich (≤) 2,0*10⁻⁶/K bei 20 °C, **dadurch gekennzeichnet, dass** das Referenzobjekt (9) die Form eines Quaders hat und an der Oberfläche allseits mit Referenzmarkierungen (10) in Form von Gitterlinien versehen ist.

2. Vorrichtung nach Anspruch 1, **dadurch gekennzeichnet, dass** zumindest eine Kamera (4, 5) an einem Sensorträger (7) befestigt ist.

3. Vorrichtung nach Anspruch 2, **dadurch gekennzeichnet, dass** der Sensorträger (7) aus einem Werkstoff besteht mit einem Wärmeausdehnungskoeffizienten α kleiner gleich (≤) 2,0 *10⁻⁶/K bei 20 °C.

4. Vorrichtung nach Anspruch 2 oder 3, **dadurch gekennzeichnet, dass** der Sensorträger (7) plattenförmig ausgeführt ist.

5. Vorrichtung nach einem der Ansprüche 2 bis 4, **dadurch gekennzeichnet, dass** der Sensorträger (7) an einem Traggestell (8) befestigt ist, welches den Messraum (3) umgibt.

6. Vorrichtung nach einem der Ansprüche 1 bis 5, **dadurch gekennzeichnet, dass** zumindest eine Kamera (6) an einem Traggestell (8) befestigt ist, welches den Messraum (3) umgibt.

7. Vorrichtung nach Anspruch 5 oder 6, **dadurch gekennzeichnet, dass** das Traggestell (8) aus einem Werkstoff besteht mit einem Wärmeausdehnungskoeffizienten α kleiner gleich (≤) 2,0 * 10⁻⁶/K bei 20 °C.

8. Vorrichtung nach einem der Ansprüche 1 bis 7, **dadurch gekennzeichnet, dass** das Referenzobjekt (9), der Sensorträger (7) und/oder das Traggestell (8) aus kohlefaserverstärktem Kunststoff (CFK) bestehen.

9. Vorrichtung nach einem der Ansprüche 1 bis 8, **dadurch gekennzeichnet, dass** das Referenzobjekt (9), der Sensorträger (7) und/oder das Traggestell (8) aus glasfaserverstärktem Kunststoff (GFK) bestehen.

10. Vorrichtung nach einem der Ansprüche 1 bis 9, **dadurch gekennzeichnet, dass** das Referenzobjekt (9), der Sensorträger (7) und/oder das Traggestell (8) aus Carbon bestehen.

11. Vorrichtung nach einem der Ansprüche 1 bis 10, **dadurch gekennzeichnet, dass** das Referenzobjekt (9), der Sensorträger (7) und/oder das Traggestell (8) aus Invar-Stahl bestehen.

## Claims

1. Apparatus for optical measurement and/or examination of welding assemblies (2), in particular motor vehicle axles or instrument panels, comprising a measuring space (3) in which cameras (4-6) are arranged for taking images of a welding assembly (2) and an evaluation device (A), wherein a reference object (9) is fixedly arranged in the measuring space (3), wherein the reference object (9) is made of a material having a coefficient of thermal expansion α less than or equal to (≤) 2.0 * 10⁻⁶/K at 20°C, **characterised in that** the reference object (9) is shaped in the form of a block and has a surface which is on all sides provided with reference markings (10) in the form of grid lines.

2. Apparatus according to claim 1, **characterised in that** at least one camera (4, 5) is secured to a sensor carrier (7).

3. Apparatus according to claim 2, **characterised in that** the sensor carrier (7) is made of a material having a coefficient of thermal expansion α less than or equal to (≤) 2.0 * 10⁻⁶/K at 20°C.

4. Apparatus according to claim 2 or 3, **characterised in that** the sensor carrier (7) has a plate-shaped configuration.

5. Apparatus according to any of claims 2 to 4, **characterised in that** the sensor carrier (7) is mounted on a support frame (8) surrounding the measuring space (3).

6. Apparatus according to any of claims 1 to 5, **characterised in that** at least one camera (6) is secured to a support frame (8) surrounding the measuring space (3).

7. Apparatus according to claim 5 or 6, **characterised in that** the support frame (8) is made of a material having a coefficient of thermal expansion α less than or equal to (≤) 2.0 *10⁻⁶/K at 20°C.

8. Apparatus according to any of claims 1 to 7, **characterised in that** the reference object (9), the sensor carrier (7) and/or the support frame (8) is made of carbon fiber reinforced plastic (CFRP).

9. Apparatus according to any of claims 1 to 8, **characterised in that** the reference object (9), the sensor carrier (7) and/or the support frame (8) is made of glass fiber reinforced plastic (GRP).

10. Apparatus according to any of claims 1 to 9, **characterised in that** the reference object (9), the sensor carrier (7) and/or the support frame (8) is made of carbon.

11. Apparatus according to any of claims 1 to 10, **characterised in that** the reference object (9), the sensor carrier (7) and/or the support frame (8) is made of Invar steel.

## Revendications

1. Dispositif destiné à la mesure optique et/ou au contrôle optique de modules soudés (2), en particulier d'essieux de véhicule automobile ou de supports d'instruments,
lequel comprend un espace de mesure (3) avec des caméras (4 à 6) placées à l'intérieur et destinées à l'enregistrement d'images d'un module soudé (2) ainsi qu'un dispositif d'évaluation (A),
dans lequel un objet de référence (9) est placé, stationnaire, dans l'espace de mesure (3),
dans lequel l'objet de référence (9) est en un matériau ayant un coefficient de dilatation thermique α inférieur ou égal à (≤) 2,0*10⁻⁶/K à 20 °C,
**caractérisé en ce que** l'objet de référence (9) a la forme d'un parallélépipède et est muni, sur sa surface et de tous côtés, de repères de référence (10) sous la forme de lignes de quadrillage.

2. Dispositif selon la revendication 1, **caractérisé en ce qu'**au moins une caméra (4, 5) est fixée à un support de capteur (7).

3. Dispositif selon la revendication 2, **caractérisé en ce que** le support de capteur (7) est en un matériau ayant un coefficient de dilatation thermique α inférieur ou égal à (≤) 2,0*10⁻⁶/K à 20 °C.

4. Dispositif selon la revendication 2 ou 3, **caractérisé en ce que** le support de capteur (7) est réalisé en forme de plaque.

5. Dispositif selon l'une des revendications 2 à 4, **caractérisé en ce que** le support de capteur (7) est fixé à un cadre porteur (8) qui entoure l'espace de mesure (3).

6. Dispositif selon l'une des revendications 1 à 5, **caractérisé en ce qu'**au moins une caméra (6) est fixée à un cadre porteur (8) qui entoure l'espace de mesure (3).

7. Dispositif selon la revendication 5 ou 6, **caractérisé en ce que** le cadre porteur (8) est en un matériau ayant un coefficient de dilatation thermique α inférieur ou égal à (≤) 2,0*10⁻⁶/K à 20 °C.

8. Dispositif selon l'une des revendications 1 à 7, **caractérisé en ce que** l'objet de référence (9), le support de capteur (7) et/ou le cadre porteur (8) sont en une matière plastique renforcée par des fibres de carbone (CFK).

9. Dispositif selon l'une des revendications 1 à 8, **caractérisé en ce que** l'objet de référence (9), le support de capteur (7) et/ou le cadre porteur (8) sont en une matière plastique renforcée par des fibres de verre (GFK).

10. Dispositif selon l'une des revendications 1 à 9, **caractérisé en ce que** l'objet de référence (9), le support de capteur (7) et/ou le cadre porteur (8) sont en carbone.

11. Dispositif selon l'une des revendications 1 à 10, **caractérisé en ce que** l'objet de référence (9), le support de capteur (7) et/ou le cadre porteur (8) sont en acier Invar.
